# EUROPÄISCHE PATENTSCHRIFT

(11) **EP 0 519 091 B1**
(45) Veröffentlichungstag und Bekanntmachung des Hinweises auf die Patenterteilung: **05.10.1994**
(21) Anmeldenummer: 91109833.3
(22) Anmeldetag: 15.06.1991
(51) Int. Cl.: H02K 3/24, H02K 3/50, H02K 9/00

(54) **Gasgekühlte elektrische Maschine**
Gaseous cooled electrical machine
Machine électrique refroidie par un gaz

(43) Veröffentlichungstag der Anmeldung: 23.12.1992
(73) Patentinhaber: ASEA BROWN BOVERI AG, 5400 Baden (CH)
(72) Erfinder: Geller, Marius, Dr., CH-5442 Fislisbach (CH); Novosel, Ivan, CH-5035 Unterentfelden (CH); Zimmermann, Hans, CH-8716 Mönchaltorf (CH); Lanz, Stefan, CH-8052 Zürich (CH)

(56) Entgegenhaltungen:
- EP-A- 0 427 208
- CH-A- 73 333
- GB-A- 1 450 501
- US-A- 2 915 655
- PATENT ABSTRACTS OF JAPAN vol. 6, no. 81 (E-107)(959) 19. Mai 1982 & JP-A-57 020 141 ( MITSUBISHI DENKI K.K. ) 2. Februar 1982

## Beschreibung

### TECHNISCHES GEBIET

Die Erfindung bezieht sich auf eine gasgekühlte elektrische Maschine mit einem Rotor, einem Stator und einem den Stator umgebenden Gehäuse, mit einem oder zwei in einer Nut übereinanderliegenden, aus gegeneinander isolierten Teilleitern aufgebauten Statorwicklungsstäben, die ausserhalb des Statorblechkörpers im Wickelkopfraum mittels metallischer Oesen elektrisch und mechanisch miteinander zu einer Wicklung verbunden sind, mit im wesentlichen radialen Schlitzen oder Kanälen im Stator, durch welche Kühlgas hindurchleitbar ist, und einem Ventilator auf jeder Maschinenseite, dessen Ansaugraum vom Wickelkopfraum durch eine Trennwand getrennt ist.

Die Erfindung nimmt dabei Bezug auf einen Stand der Technik, wie er sich beispielsweise aus der Zeitschrift BROWN BOVERI TECHNIK 3-86, Seite 135, ergibt.

### TECHNOLOGISCHER HINTERGRUND UND STAND DER TECHNIK

Bei elektrischen Maschinen mit indirekt gekühlter Statorwicklung reichte bislang zur Kühlung der Stirnbügel im Wickelkopf und insbesondere der Oesen, welche die einzelnen Leiterstäbe elektrisch und mechanisch zur eigentlichen Spule verbinden,der Gasstrom aus, welcher den Ventilator verlässt und durch den Wickelkopf durchtritt. Aber bei Grenzleistungsmaschinen können die Wickelköpfe und Oesen durch zu hohe Erwärmung gefährdet werden. Während der in den Wicklungsnuten eingebettete Teil der Wicklung gezielt gekühlt wird, erwärmen sich diese freiliegenden Wicklungsteile und auch die Oesen nicht nur durch den Stromfluss sondern auch durch die elektromagnetischen Felder im Wickelkopfraum. Besonders gefährdet ist dabei die Isolation im Bereich der Oesen und - sofern die Oesen nicht hartgelötet sind - die gesamte Konstruktion der Verbindungsleiter und der Oesen.

### KURZE DARSTELLUNG DER ERFINDUNG

Der Erfindung liegt die Aufgabe zugrunde, eine elektrische Maschine der eingangs genannten Gattung zu schaffen, bei welcher auch die Enden des Wickelkopfes optimal gekühlt werden können.

Diese Aufgabe wird erfindungsgemäss dadurch gelöst, dass die Oesen mit einer Kappe versehen sind, welche die Oese umgibt und in der Oese oder in der Kappe im wesentlichen axial verlaufende Kanäle vorgesehen sind, die gegen den Statorblechkörper hin offen sind, dass die Kappe an ihrem trennwandseitigen Ende eine Oeffnung aufweist, die mit den besagten Kanälen in freier Verbindung steht, und welche Oeffnung an eine flexible Leitung angeschlossen ist, die unmittelbar in den Ansaugraum des Ventilators führt.

Ausführungsbeispiele der Erfindung, vorteilhafte Weiterbildungen und Ausgestaltungen der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen vereinfachten Längsschnitt durch die Endpartie eines gasgekühlten Turbogenerators mit indirekt gekühlter Statorwicklung und zwangsgekühlten Oesen;
- Fig.2: einen vereinfachten Schnitt in Umfangsrichtung durch die Oesen nach Fig.1;
- Fig.3: einen mehr ins Detail gehenden Längsschnitt durch das Wickelkopfende des Turbogenerators gemäss Fig.1;
- Fig.4: einen Querschnitt durch das Wickelkopfende gemäss Fig.3 längs deren Linie AA;
- Fig.5: eine alternative Ausführungsform einer zwangsgekühlten Oese mit Kühlrippen im Schnitt;
- Fig.6: eine Abwandlung der Kappe gemäss Fig.3 und 4 für den nachträglichen Einbau.

### WEGE ZUR AUSFÜHRUNG DER ERFINDUNG

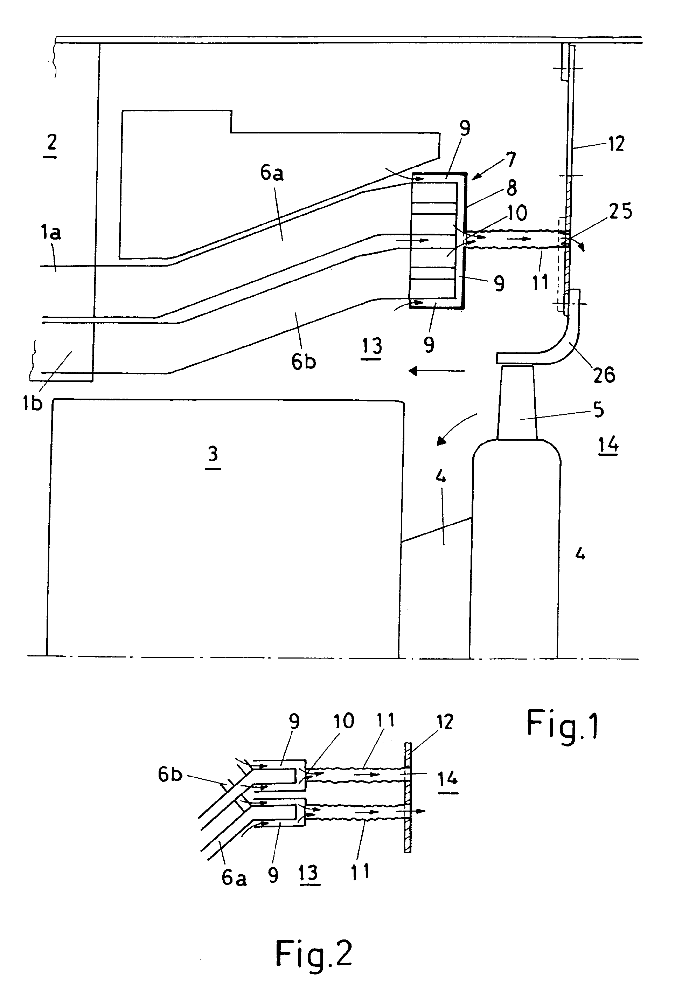

Der Turbogenerator nach Fig.1 weist einen mit einer indirekt gekühlten Statorwicklung versehenen Stator 2 und einen Rotor 3 auf. Auf der Rotorwelle 4 ist ein Axialventilator 5 befestigt. In einer Statornut liegen jeweils 2 Statorwicklungsstäbe 1a und 1b übereinander, die sich ausserhalb des Statorblechkörpers in Stirnbügeln 6a und 6b fortsetzen. Die Enden der Stirnbügel sind durch Oesen 7 elektrisch und mechanisch so miteinander verbunden, dass sich eine dreiphasige Statorwicklung ergibt (vgl.Fig.2). Ueber die Oesen sind Kappen 8 aus Isoliermaterial geschoben, die zwischen sich und den Stabenden Kanäle 9 freilassen. An dem dem Statorblechkörper abgewandten Ende weisen die Kappen eine Oeffnung 10 auf, an die eine flexible Leitung 11 angeschlossen ist. Die flexiblen Leitungen führen allesamt durch eine Trennwand 12, welche den Wickelkopfraum 13 vom Ansaugraum 14 des Ventilators 5 trennt.

Im Betrieb des Turbogenerators herrscht im Wickelkopfraum 13 ein Ueberdruck gegenüber dem Ansaugraum 14 des Ventilators 5, sodass durch die Kanäle 9 und flexiblen Leitungen 11 ein Teilstrom des vom Ventilator geförderten Kühlmediums (Luft oder Wasserstoff) strömt und die Leiterstabenden und Oesen kühlt.

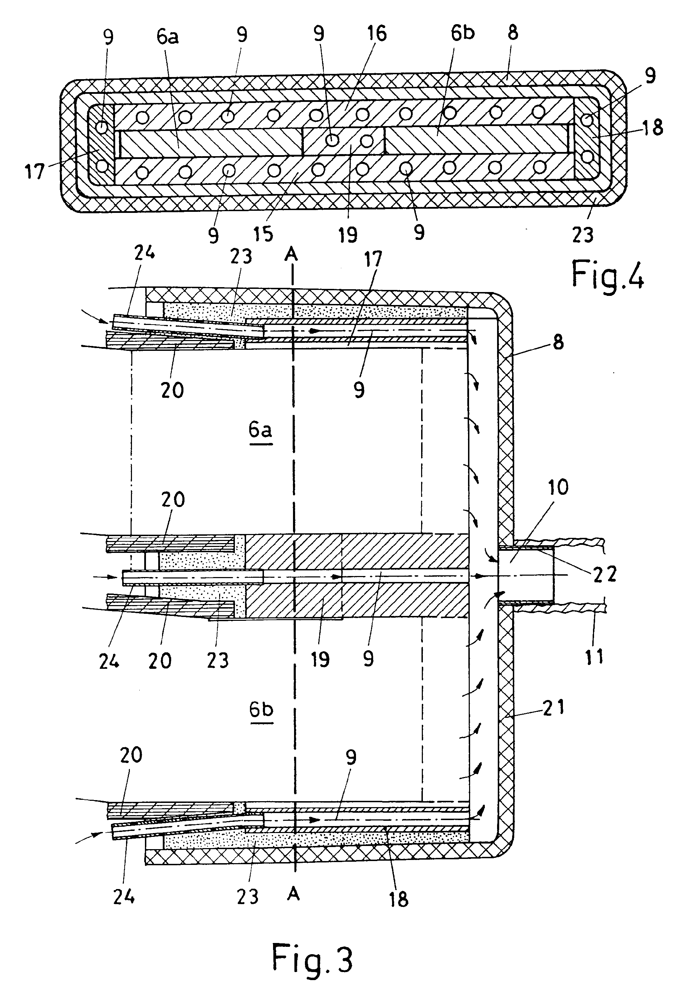

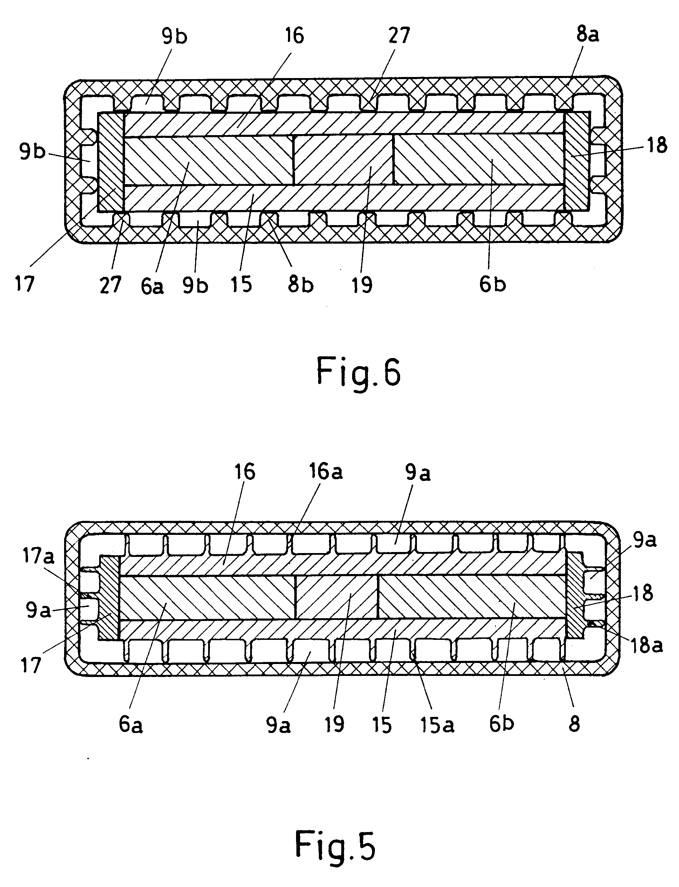

Fig.3 und Fig.4 vermitteln ein detailierteres Bild der Oesen 7 und der darüber geschobenen Kappen 8. Die Oesen sind aus einzelnen Platten, zwei seitlichen Platten 15, 16, zwei Deckplatten 17, 18 und einer Mittelplatte 19 zusammengesetzt, die mit den Leiterstabenden 6a und 6b verlötet sind. Alle Platten 15 bis 19 weisen axial verlaufende Kanäle 9, im Beispielsfall Durchgangsbohrungen, auf. Die Wicklungsisolation 20 der Statorwicklungsstäbe 6a, 6b reicht bis unter die Kappe 8. Diese besteht vorzugsweise aus glasfaserverstärktem Kunststoff. Die Stirnseite 21 der Kappe ist von den Stirnseiten der Leiterstäbe 6a, 6b beabstandet und weist eine Oeffnung 10 mit einem Rohrstutzen 22 auf, die in freier Verbindung mit den Kanälen 9 steht. Die Fixierung der Kappe 8 auf der Oese 7 erfolgt durch Ausgiessen mit einer Füllmasse 23, z.B. Epoxidharz oder Polyurethanharz. Weil aus Isolationsgründen die Kappe 8 die Platten 15 bis 19 überragen sollte, sind die Kanäle 9 in Richtung Maschineninneren durch Rohre 24 aus Isoliermaterial verlängert, die ausserhalb der Kappe in den Wickelkopfraum 13 münden. Anstelle von Durchgangsbohrungen können die Kanäle 9 auch durch die Zwischenräume 9a von axial verlaufenden Kühlrippen 15a, 16a, 17a, 18a gebildet werden, die an der Aussenfläche der metallischen Platten 15 bis 18 ausgebildet sind. Diese Variante ist in Fig.5 beispielsweise veranschaulicht. Die Befestigung der Kappe 8 kann dabei gegebenenfalls ohne Hilfsmittel durch Aufpressen auf die Oese erfolgen.

Auf die Rohrstutzen 22 ist die flexible Leitung 11, z.B. aus PTFE, geschoben. Das andere Ende der flexiblen Leitung 11 führt zur Trennwand 12, die gleichfalls mit nach innen gerichteten Stutzen 25 versehen ist. Aus Fig.1 ist ersichtlich, dass die Montage der flexiblen Leitungen 11 nach Entfernen der Ventilatorverschalung 26, die mit der Trennwand 12 verschraubt ist, leicht möglich ist.

Die Erfindung lässt sich gegebenenfalls auch bei bestehenden Maschinen mit vergleichsweise wenig Aufwand anwenden. Dies ist in Fig.6 veranschaulicht. Dazu wird nach Entfernung der Isolation der Oesen eine Kappe 8a aus Isoliermaterial auf die Oesen aufgeschoben und dort befestigt. Die Kanäle zur Führung des Kühlmittels sind bei dieser Art Kappe durch Zwischenräume 9b zwischen nach innen gerichteten Stegen 8b in der Kappe 8a gebildet.

## Patentansprüche

1. Gasgekühlte elektrische Maschine mit einem Rotor (3), einem Stator (2) und einem den Stator umgebenden Gehäuse, mit einem oder zwei in einer Nut übereinanderliegenden, aus gegeneinander isolierten Teilleitern aufgebauten Statorwicklungsstäben (1a,1b), die ausserhalb des Statorblechkörpers im Wickelkopfraum (13) elektrisch und mechanisch mittels metallischer Oesen (7) miteinander zu einer Wicklung verbunden sind, mit im wesentlichen radialen Schlitzen oder Kanälen im Stator, durch welche Kühlgas hindurchleitbar ist, und einem Ventilator (5) auf jeder Maschinenseite, dessen Ansaugraum (14) vom Wickelkopfraum (13) durch eine Trennwand (12) getrennt ist, dadurch gekennzeichnet, dass die Oesen (7) mit einer Kappe (8) versehen sind, welche die Oese (7) umgibt und in der Oese (7) oder in der Kappe (8) im wesentlichen axial verlaufende Kanäle (9) vorgesehen sind, die gegen den Statorblechkörper (2) hin offen sind, dass die Kappe (8) an ihrem trennwandseitigen Ende eine Oeffnung (10) aufweist, die mit den besagten Kanälen (9) in freier Verbindung steht, und welche Oeffnung (10) an eine flexible Leitung (11) angeschlossen ist, die unmittelbar in den Ansaugraum (14) des Ventilators (5) führt.

2. Elektrische Maschine nach Anspruch 1, dadurch gekennzeichnet, dass die Oesen (7) mit im wesentlichen axial verlaufenden Kanälen (9) versehen sind.

3. Elektrische Maschine nach Anspruch 1, dadurch gekennzeichnet, dass die Oesen (7) mit im wesentlichen axial verlaufenden Kühlrippen (15a,16a,17a,18a) versehen sind.

4. Elektrische Maschine nach Anspruch 1, dadurch gekennzeichnet, dass das Innere der Kappe (8a) mit nach innen gerichteten Vorsprüngen (8b) versehen ist, die zwischen sich Kanäle (9b) freilassen.

## Claims

1. Gas-cooled electric machine having a rotor (3), a stator (2) and a housing surrounding the stator, having one or two stator winding bars (1a, 1b), which are located one above the other in a groove, are built up from mutually insulated component conductors and are connected to one another electrically and mechanically outside the stator core assembly in the overhang space (13) by means of metallic lugs (7) to form a winding, and having essentially radial slots or ducts in the stator through which cooling gas can be led and a fan (5) on each machine side whose suction chamber (14) is separated by a partition (12) from the overhang space (13), characterized in that the lugs (7) are provided with a cap (8) which surrounds the lug (7), and there are provided in the lug (7) or in the cap (8) ducts (9) which extend essentially axially and are open towards the stator core assembly (2), and the cap (8) has at its end on the partition side an opening (10) which is freely connected to said ducts (9) and is connected to a flexible line (11) which leads directly into the suction chamber (14) of the fan (5).

2. Electric machine according to Claim 1, characterized in that the lugs (7) are provided with ducts (9) which extend essentially axially.

3. Electric machine according to Claim 1, characterized in that the lugs (7) are provided with cooling ribs (15a, 16a, 17a, 18a) which extend essentially axially.

4. Electric machine according to Claim 1, characterized in that the interior of the cap (8a) is provided with inwardly directed projections (8b) which leave ducts (9b) free between them.

## Revendications

1. Machine électrique refroidie au gaz, avec un rotor (3), un stator (2) et une carcasse entourant le stator, avec une ou deux barres d'enroulement statorique (1a, 1b) superposées dans une encoche et constituées de conducteurs partiels isolés les uns des autres, qui, hors du corps feuilleté du stator, sont assemblées électriquement et mécaniquement l'une à l'autre en un enroulement au moyen d'oeillets métalliques (7), dans l'espace de la tête de bobine (13), avec des fentes ou des canaux essentiellement radiaux dans le stator, par lesquels un gaz de refroidissement peut circuler, et avec un ventilateur (5) de chaque côté de la machine, dont l'espace d'aspiration (14) est séparé de l'espace de la tête de bobine (13) par une cloison (12), caractérisée en ce que les oeillets (7) sont pourvus d'une coiffe (8), qui entoure l'oeillet (7) et que, dans l'oeillet (7) ou dans la coiffe (8), il est prévu des canaux (9) de direction essentiellement axiale, qui sont ouverts vers le corps feuilleté du stator (2), en ce que la coiffe (8) présente à son extrémité proche de la cloison une ouverture (10) qui est en communication libre avec lesdits canaux (9), cette ouverture (10) étant raccordée à une conduite flexible (11) qui conduit directement dans l'espace d'aspiration (14) du ventilateur (5).

2. Machine électrique suivant la revendication 1, caractérisée en ce que les oeillets (7) sont pourvus de canaux (9) à orientation essentiellement axiale.

3. Machine électrique suivant la revendication 1, caractérisée en ce que les oeillets (7) sont pourvus d'ailettes de refroidissement (15a, 16a, 17a, 18a) à orientation essentiellement axiale.

4. Machine électrique suivant la revendication 1, caractérisée en ce que l'intérieur de la coiffe (8a) est pourvu de saillies (8b) dirigées vers l'intérieur, qui laissent libres entre elles des canaux (9b).
